# NEW EUROPEAN PATENT SPECIFICATION

(11) **EP 1 074 568 B2**
(45) Date of publication and mention of the opposition decision: **29.03.2006**
(45) Mention of the grant of the patent: 09.10.2002
(21) Application number: 00202724.1
(22) Date of filing: 31.07.2000
(51) Int. Cl.: C08G 18/36, C08G 18/08, B22C 1/22, C08G 18/54, C08L 75/04

(54) **Foundry binder systems**
Giessereibindersysteme
Systèmes de liants de fonderie

(30) Priority: 02.08.1999 IT MI991725
(43) Date of publication of application: 07.02.2001
(73) Proprietor: Cavenaghi SPA, 20020 Lainate (Milano) (IT)
(72) Inventor: Zennaro, Giorgio, 21047 Saronno (Varese) (IT); Balconi, Massimo, 20018 Sedriano (Milano) (IT)
(74) Representative: Pistolesi, Roberto

(56) References cited:
- WO-A-95/14735
- GB-A- 2 050 400
- US-A- 4 268 425
- US-A- 4 273 179
- US-A- 4 698 377
- US-A- 5 739 255

## Description

The present invention relates to polyurethane systems to be used as binders in admixture with sand, or similar granular substances, for the production of moulds or cores for foundry use; in more detail, the invention relates to the polyisocyanate-based component that can be used in such binder compositions.

The aforesaid foundry binder systems normally consist of three components, that is a polyol (generally a phenolic resin), a polyisocyanate and a catalyst, which are mixed with sand or similar granular substances in order then to form the cores or moulds round which, or in which, the casting of the molten metal will be carried out.

The phenolic resin is normally a condensation product of a phenol or of a phenolic derivative with aldehydes, containing free hydroxyl groups; resins of this type are well known in the art and are described for example in US patents Nos. US-3,409,579; US-3,676,392 and 3,485,797; resins of this type are commonly available on the market under the following commercial names: ISOCURE or PEP-SET (of Ashland), GASHARZ or PENTEX (of Hüttenes-Albertus), GIOCA CB or RAPIDUR (of Cavenaghi).

The polyisocyanate, which may be both aliphatic and aromatic, should contain a number of NCO groups equal to at least 2; representative examples of such polyisocyanates are hexamethylene isocyanate, 4,4'-dicyclohexamethylene diisocyanate, 2,4- and 2,6-toluene diisocyanate, diphenylmethane diisocyanate, 1,5-naphthalene diisocyanate, triphenylmethane diisocyanate, xylene diisocyanate, and chlorophenylene-2,4-diisocyanat The aforesaid polyisocyanates are commonly available on the market under the following commercial names: Baymidur (of Bayer), CARADATE (of Shell), TEDIMON (of Enichem), LUPRANAT (of BASF).

Depending on the modes in which the catalyst is introduced into the mixture of sand, phenolic resin and polyisocyanate, the methods for the production of foundry cores or moulds are divided into two distinct categories: the "cold box" method and the "no bake" method.

In the "cold box" method, the phenolic resin and the polyisocyanate are mixed with the sand at ambient temperature and the mix thus obtained is modelled into the desired shape; the catalyst is then introduced, which promotes the reaction of formation of the polyurethane between the hydroxyl groups of the resin and the NCO groups of the polyisocyanate, causing hardening of the core or mould. The catalysts that can be used in this method are very volatile substances, normally tertiary amines, which are blown in vapour form into the mixture consisting of sand, phenolic resin and polyisocyanate; the tertiary amines preferred for this purpose are trimethylamine, dimethylethylamine, triethylamine, dimethylisopropylamine, and dimethyl-normalpropylamine.

In the "no bake" method, the phenolic resin, the polyisocyanate and the catalyst are mixed directly with the sand; in this case, in order to allow modelling of the mix into the desired shape, the catalyst must be in the liquid state at ambient temperature and should further have a catalytic power less than that of the catalysts used in the "cold box" method, so as to prevent the mix from hardening before it has been correctly modelled. The catalysts preferred for this purpose are pyridine derivatives, generally phenylpropylpyridine, or imidazole derivatives, such as N-methyl imidazole.

Both in the "cold box" method and in the "no bake" method it is preferable for the ratio between the NCO groups of the polyisocyanate and the hydroxyl groups of the phenolic resin to be between 1.25 and 0.8 and, even more preferably, to be equal to 1. Normally, this result is obtained by mixing with the sand almost equal amounts by weight of the phenolic resins and the polyisocyanates currently commercially available; one part by weight of the system consisting of the two separate components is then added to 50-150 parts by weight of sand.

To facilitate the measuring and mixing of the components and to obtain a mix sufficiently fluid to allow correct modelling thereof, the phenolic resin and the polyisocyanate customarily contain organic solvents; however, the difference in polarity between the phenolic resin and the polyisocyanate significantly restricts the choice of organic solvents that can be used for this purpose; polar solvents, both protic and aprotic, are in fact good solvents for the phenolic resin but are hardly compatible with the polyisocyanate; conversely, apolar solvents, preferably aromatic, are optimum solvents for the polyisocyanate but are not, however, suitable for the phenolic resin.

It is therefore preferred to remedy this problem by using mixtures of solvents such that the phenolic resin and the polyisocyanate constitute stable solutions such as to produce with the sand a fluid mix without phase separation.

The phenolic resin preferably contains polar organic solvents or mixtures thereof in amounts generally of between 10 and 60% by weight; said organic solvents are preferably selected from among dialkyl esters such as dialkylphthalates, dialkylglutarates, dialkylsuccinates, dialkyladipates and the esters of glycol ethers, usually in combination with high-boiling aromatic hydrocarbons.

The polyisocyanate, on the other hand, contains apolar organic solvents or mixtures thereof in amounts generally of between 20 and 40% by weight; said solvents are preferably selected from among high-boiling aromatic hydrocarbons, such as benzenes, xylenes and naphthalenes, sometimes used in combination with vegetable oils, normally specific siccative or semisiccative oils (such as soya oil, linseed oil, coconut oil, rapeseed oil, etc.), for the precise purpose of facilitating the drying of the moulds or cores for foundry use. The use of aromatic hydrocarbons, usually present in abundant amounts in the polyisocyanate-based component, however, represents a great problem from the point of view of hygiene of the work because of their high volatility, noxiousness and their penetrating and unpleasant odour.

One of the objectives of current research in the field of foundry binder systems is therefore directed towards the possibility of eliminating or at least limiting the presence of aromatic hydrocarbons in the polyisocyanate-based component and, as a consequence, the identification of alternative solvents that can be used for this purpose.

Recently (EP-771599) there has been proposed the use of methylesters of fatty acids having at least 12 carbon atoms (such as the methylester of rapeseed oil) as an alternative to the aromatic hydrocarbons in the polyisocyanate-based components and usable, among other things, also as components of the solvent in the phenolic resin.

The aforesaid methylesters of fatty acids are obtained industrially by transesterification of the corresponding triglycerides, or by reaction with methanol of the corresponding vegetable oil to give methylester and glycerin. The production of the methylesters of fatty acids then includes an additional passage with respect to the vegetable oils, therefore increasing not inconsiderably the overall production costs.

A possibility for solving the problem may be that of using the vegetable oils as sole solvents of the polyisocyanates; the use of the vegetable oils in fact makes it possible to obtain cores and moulds provided with a high and valued mechanical strength. However, because of their structure, which is different from that of the polyisocyanates, the vegetable oils cannot be used as sole solvents of the polyisocyanate-based component.

It is therefore an aim of the present invention to provide an alternative solvent to the aromatic hydrocarbons, which solvent can be used in combination with the vegetable oils in the preparation of a polyisocyanate-based composition that can be used in the preparation of foundry binder systems.

It has now surprisingly been found that aprotic polar organic solvents normally used in the phenolic resins, such as for example dialkylphthalates, may conveniently be mixed with polyisocyanate and with the aforesaid vegetable oils, producing a polyisocyanate-based composition which can then be used in combination with the polyols and in particular with the phenolic resins normally available on the market.

Said polyisocyanate-based composition, which constitutes the main subject of the present invention, has substantially the following percentage composition:
(a) a polyisocyanate in an amount of 50-95% by weight;
(b) a vegetable oil in an amount of 5-40% by weight;
(c) an aprotic polar organic solvent in an amount of 2.5-30% by weight.

According to a preferred feature of the invention, the polyisocyanate will be present in an amount of 70-80% by weight; the vegetable oil will be present in an amount of 15-25% by weight; the aprotic polar organic solvent will be present in an amount of 7.5-15%, for a total of 100%. For a better result in terms of stability, the aprotic polar organic solvent will be used in an amount of not less than 30% by weight with respect to the vegetable oil.

The aprotic polar solvents preferably usable for the purposes of the present invention can be selected from among those having the structural formula given below, or mixtures thereof, 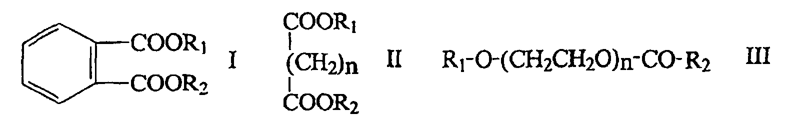 wherein R₁ and R₂ are alkyl radicals having from 1 to 12 carbon atoms, preferably from 1 to 4, and wherein the total number of carbon atoms contained in said R₁ and R₂ groups is no more than 16.

With regard to the compounds of formula I, these are generally known as dialkylphthalates; the preferred dialkylphthalate for the purposes of the present invention is 1,2-diisobutylphthalate.

With regard to the compounds of formula II or III, however, is normally between 1 and 4; among the compounds having the structural formula II, that preferred for the implementation of the invention is known in the art as DBE, that is a mixture of methylesters of succinic, glutaric and adipic acids; with regard to the compounds of formula III, the preferred compound is butyldiglycol acetate.

As mentioned previously, the polyisocyanate-based composition accordi ng to the present invention is perfectly usable with the polyols and, in particular, with the phenolic resins currently commercially available (whether containing aromatic hydrocarbons or not); the binder system consisting of these two separate components can then be added to the sand or similar granular systems in order to carry out both the "cold box" process and the "no bake" process. The mixes thus obtained are fluid and homogeneous and therefore easily modelled into the desired shapes, eliminating or considerably limiting the emission of harmful vapours.

It was also surprisingly found that by means of a binder system composed of a phenolic resin, a catalyst and a polyisocyanate-based composition containing soya oil and one of the compounds of formula I, II or III, foundry cores and moulds are obtained which are provided with a mechanical strength greater than that of the cores and moulds normally obtainable by using polyisocyanates containing aromatic hydrocarbons.

Consequently, one of the preferred features of the present invention is represented by a polyisocyanate-based composition containing:
(a) a polyisocyanate in an amount of 50-95% by weight, preferably 70-80%;
(b) soya oil in an amount of 5-40% by weight, preferably 15-25%;
(c) 1,2-diisobutylphthalate, or DBE, or butyldiglycol acetate in an amount of 2.5-30% by weight, preferably 7.5-15%.

The examples which follow should be considered as non-limiting examples of the invention.

### EXAMPLES

### "Cold box" process

| **Example 1** (according to the invention) | | |
|---|---|---|
| | Baymidur K88 HV | 75% |
| | Refined soya oil | 17% |
| | 1,2-diisobutylphthalate | 8% |
| | Total | 100 |

| **Example 1a** (according to the invention) | | |
|---|---|---|
| | Baymidur K88 HV | 75% |
| | Refined soya oil | 17% |
| | DBE | 8% |
| | Total | 100 |

| **Example 1b** (according to the invention) | | |
|---|---|---|
| | Baymidur K88 HV | 75% |
| | Refined soya oil | 17% |
| | Butyldiglycol acetate | 8% |
| | Total | 100 |

| **Example 1 c** (according to the invention) | | |
|---|---|---|
| | Baymidur K88 HV | 80% |
| | Refined soya oil | 13% |
| | 1,2-diisobutylphthalate | 7% |
| | Total | 100 |

| **Example 2** (comparison) | | |
|---|---|---|
| | Baymidur K88 HV | 75.0% |
| | Linseed oil | 4.0% |
| | Solvesso 100 | 21.0% |
| | Total | 100 |

Baymidur K 88 HV is the commercial name of a mixture of isomers and homologues of diphenylmethanediisocyanate marketed by Bayer; Solvesso 100 is the commercial name of a mixture of aromatic hydrocarbons with a boiling range of 163-179°C, marketed by Exxon Chemical.

| **Control mixture** | |
|---|---|
| 100 parts by weight | LA 32 silica sand |
| 0.8 parts by weight | resin GIOCA CB 100A/ECO |
| 0.8 parts by weight | Examples 1, 1a, 1b, 1c, 2. |

Resin GIOCA CB 100A/ECO is the commercial name given by Cavenaghi Spa to a phenolic resin for the "cold box" process, devoid of aromatic hydrocarbons.

The aforesaid mixtures were used to prepare standard +GF+ bars, each of which was gassed with 0.4 ml of dimethylethylamine and washed for 20" with nitrogen. The flexural strength of said bars was measured after 2', 1 hour and 24 hours from gassing; the results obtained are given in the following table.

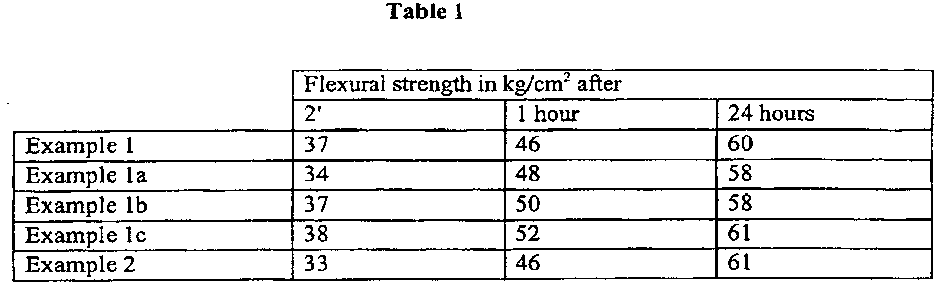

The composition of example 1 (according to the invention) was used also in combination with the resin GIOCA CB 14A1, which is the commercial name given by Cavenaghi Spa to a phenolic resin for the "cold box" process, containing aromatic hydrocarbons.

The results obtained, compiled in Table 1 b, although inferior to those of Table 1, demonstrate that the isocyanate-based component according to the invention may be used also with a "cold box" phenolic resin containing aromatic hydrocarbons.

**Table 1b**

| Flexural strength in kg/cm² after | | |
|---|---|---|
| 2' | 1 hour | 24 hours |
| 20 | 28 | 32 |

### "No bake" process

A direct comparison was made between the following polyisocyanate-based compositions:

| **Example 3** (according to the invention) | | |
|---|---|---|
| | Baymidur K88 HV | 70% |
| | Refined soya oil | 20% |
| | 1,2-diisobutylphthalate | 10% |
| | Total | 100 |

| **Example 3a** (according to the invention) | | |
|---|---|---|
| | Baymidur K88 HV | 70% |
| | Refined soya oil | 20% |
| | DBE | 10% |
| | Total | 100 |

| **Example 3b** (according to the invention) | | |
|---|---|---|
| | Baymidur K88 HV | 70% |
| | Refined soya oil | 20% |
| | Butyldiglycol acetate | 10% |
| | Total | 100 |

| **Example 3c** (according to the invention) | | |
|---|---|---|
| | Baymidur K88 HV | 70% |
| | Refined soya oil | 15% |
| | 1,2-diisobutylphthalate | 15% |
| | Total | 100 |

| **Example 4** (comparison) | |
|---|---|
| Baymidur K88 HV | 70% |
| Solvesso 150 | 30% |
| Total | 100 |

Solvesso 150 is the commercial name of a mixture of aromatic hydrocarbons with a boiling range of 182-203°C marketed by Exxon Chemical.

| **Control mixture** | |
|---|---|
| 100 parts by weight | LA 32 silica sand |
| 0.5 parts by weight | RAPIDUR ECO part A |
| 0.5 parts by weight 1.2%(*) | Examples 3, 3a, 3b, 3c, 4 phenylpropylpyridine |

| | |
|---|---|
| (*) percent based on amount of RAPIDUR ECO part A. | |

RAPIDUR ECO part A is the commercial name given by Cavenaghi Spa to a phenolic resin for the "no bake" process, devoid of aromatic solvents.

The aforesaid mixtures were used to prepare standard +GF+ bars which were left to harden in the core box; the times for start and end of setting were very similar and are given in the table below together with the flexural strength measured after 1 hour, 2 hours and 24 hours from the preparation of the mixture.

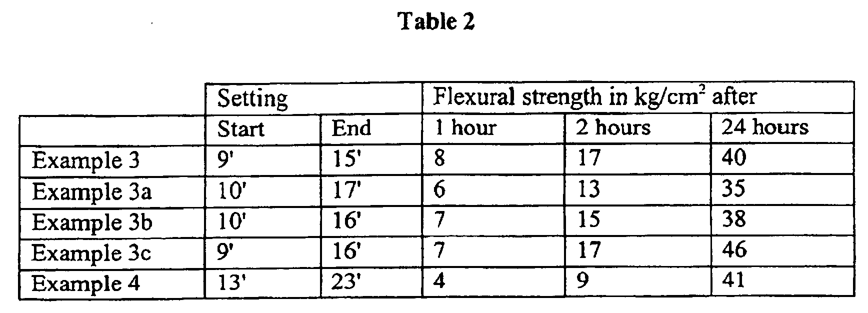

The composition of example 3 (according to the invention) was used also in combination with the resin RAPIDUR P part A, which is the commercial name given by Cavenaghi Spa to a phenolic resin for the "no bake" process, containing aromatic hydrocarbons.

The results obtained, compiled in Table 2b, although inferior to those of Table 2, demonstrate that the isocyanate-based component according to the invention may be used also with a "no bake" phenolic resin containing aromatic hydrocarbons.

**Table 2b**

| Setting | | Flexion in kg/cm² after | | |
|---|---|---|---|---|
| Start | End | 1 hour | 2 hours | 24 hours |
| 7' | 11' | 10 | 15 | 27 |

## Claims

1. A polyisocyanate-based composition that can be used in the preparation of foundry binder systems, **characterized by** having the following percentage composition:
(a) a polyisocyanate in an amount of 50-95% by weight;
(b) a vegetable oil in an amount of 5-40% by weight;
(c) an aprotic organic polar solvent in an amount of 2.5-30% by weight; for a total of 100%.

2. A composition according to claim 1, **characterized in that** said aprotic organic polar solvent is selected from among those having the formula: 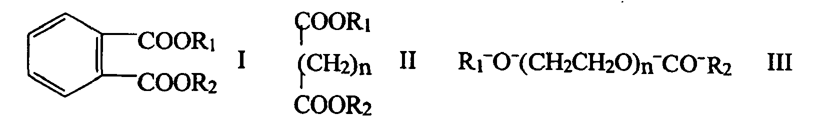 or mixtures thereof, wherein R₁ and R₂, identical or different from one another, are alkyl radicals having from 1 to 12 carbon atoms, in which the total number of carbon atoms contained in said R₁ and R₂ groups is not more than 16, and wherein n is between 1 and 4.

3. A composition according to claim 2, wherein R₁ and R₂ are alkyl radicals having from 1 to 4 carbon atoms.

4. A composition according to claim 2, **characterized in that** the compound of formula I is 1,2-diisobutylphthalate, the compound of formula II is DBE and the compound of formula III is butyldiglycol acetate.

5. A composition according to claim 1, **characterized in that** said polyisocyanate contains a number of NCO groups equal to at least 2.

6. A composition according to claim 1, **characterized in that** said vegetable oil is soya oil.

7. A composition according to claim 1, **characterized by** containing from 70 to 80% by weight of isocyanate.

8. A composition according to claim 1, **characterized by** containing from 15 to 25% by weight of vegetable oil.

9. A composition according to claim 2, **characterized by** containing from 7.5 to 15% by weight of said compound of formula I, II and/or III.

10. A polyisocyanate-based composition that can be used in the preparation of foundry binder systems, **characterized by characterized by** having the following percentage composition:
(a) a polyisocyanate in an amount of 70-80% by weight;
(b) soya oil in an amount of 15-25% by weight;
(c) 1,2-diisobutylphthalate, DBE and/or butyldiglycol acetate in an amount of 7.5-15% by weight.

11. The use of a composition according to claims 1 to .10 for the production of foundry binder systems.

12. A polyurethane foundry binder system, **characterized by** comprising an isocyanate-based composition according to claims 1 to 10.

13. A polyurethane foundry system, **characterized by** comprising:
(a) an isocyanate-based composition according to claims 1 to 10,
(b) a polyol; and, optionally,
(c) a catalyst.

14. A polyurethane system according to claim 13, **characterized in that** said polyol is a phenolic resin.

15. A polyurethane system according to claim 13, **characterized in that** said catalyst is a tertiary amine, a pyridine derivative or an imidazole derivative.

16. A polyurethane system according to claim 15, **characterized in that** said tertiary amine is selected from among trimethylamine, dimethylethylamine, triethylamine, dimethylisopropylamine, dimethyl-normalpropylamine; that said pyridine derivative is phenylpropylpyridine; and that said imidazole derivative is N-methyl imidazole.

17. A polyurethane system according to claim 15, **characterized in that** said phenolic resin is a condensation product of a phenol or of a phenolic derivative with aldehydes, containing free hydroxyl groups.

18. A polyurethane system according to claim 17, **characterized in that** said phenolic resin contains from 10 to 50% of an organic solvent.

19. A polyurethane system according to claim 18, **characterized in that** said organic solvent is a polar organic solvent.

20. The use of a polyurethane system according to claims 11 to 19 in the manufacture of foundry cores and moulds.

## Patentansprüche

1. Zusammensetzung auf Polyisocyanat-Basis, die bei der Herstellung von Giesserei-Bindemittelsystemen verwendet werden kann, **dadurch gekennzeichnet, dass** sie, bezogen auf insgesamt 100%, die folgende prozentuale Zusammensetzung aufweist:
(a) ein Polyisocyanat in einer Menge von 50 bis 95 Gew.-%,
(b) ein pflanzliches Öl in einer Menge von 5 bis 40 Gew.-%,
(c) ein aprotisches, organisches, polares Lösungsmittel in einer Menge von 2,5 bis 30 Gew.-%,

2. Zusammensetzung nach Anspruch 1, **dadurch gekennzeichnet, dass** das aprotische, organische, polare Lösungsmittel ausgewählt ist unter denen, die die Formel 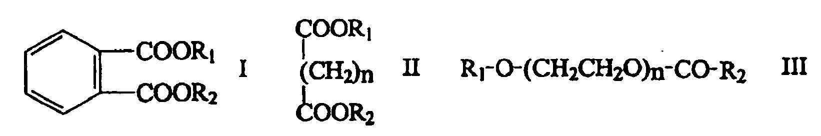 aufweisen oder Mischungen davon, worin R₁ und R₂, gleich oder verschieden voneinander, Alkylreste mit 1 bis 12 Kohlenstoffatomen sind, wobei die Gesamtanzahl an Kohlenstoffatomen, die in den genannten Gruppen R₁ und R₂ enthalten sind, nicht größer als 16 ist und worin n zwischen 1 und 4 liegt.

3. Zusammensetzung nach Anspruch 2, worin R₁ und R₂ Alkylreste mit 1 bis 4 Kohlenstoffatomen sind.

4. Zusammensetzung nach Anspruch 2, **dadurch gekennzeichnet, dass** die Verbindung der Formel l 1,2-Diisobutylphthalat ist, die Verbindung der Formel 11 DBE ist und die Verbindung der Formel 111 Butyldiglycolacetat ist.

5. Zusammensetzung nach Anspruch 1, **dadurch gekennzeichnet, dass** das Polyisocyanat eine Anzahl an NCO-Gruppen von mindestens 2 enthält.

6. Zusammensetzung nach Anspruch 1, **dadurch gekennzeichnet, dass** das pflanzliche Öl Sojaöl ist.

7. Zusammensetzung nach Anspruch 1, **dadurch gekennzeichnet, dass** sie 70 bis 80 Gew.-% Isocyanat enthält.

8. Zusammensetzung nach Anspruch 1, **dadurch gekennzeichnet, dass** sie 15 bis 25 Gew.-% pflanzliches Öl enthält.

9. Zusammensetzung nach Anspruch 2, **dadurch gekennzeichnet, dass** sie 7,5 bis 15 Gew.-% der Verbindung der Formel I, II und/oder III enthält.

10. Zusammensetzung auf Polyisocyanat-Basis, die bei der Herstellung von Giesserei-Bindemittelsystemen verwendet werden kann, **dadurch gekennzeichnet, dass** sie die folgende prozentuale Zusammensetzung aufweist:
(a) ein Polyisocyanat in einer Menge von 70 bis 80 Gew.-%,
(b) Sojaöl in einer Menge von 15 bis 25 Gew.-%,
(c) 1,2-Diisobutylphthalat, DBE und/oder Butyldiglycolacetat in einer Menge von 7,5 bis 15 Gew.-%.

11. Verwendung einer Zusammensetzung nach den Ansprüchen 1 bis 10 zur Herstellung von Giesserei-Bindemittelsystemen.

12. Polyurethan-Giesserei-Bindemittelsystem, **dadurch gekennzeichnet, dass** es eine Zusammensetzung auf Isocyanat-Basis nach den Ansprüchen 1 bis 10 umfasst.

13. Polyurethan-Giessereisystem, **dadurch gekennzeichnet, dass** es umfasst:
(a) eine Zusammensetzung auf Isocyanat-Basis nach den Ansprüchen 1 bis 10,
(b) ein Polyol und gegebenenfalls
(c) einen Katalysator.

14. Polyurethan-System nach Anspruch 13, **dadurch gekennzeichnet, dass** das Polyol ein Phenolharz ist.

15. Polyurethan-System nach Anspruch 13, **dadurch gekennzeichnet, dass** der Katalysator ein tertiäres Amin, ein Pyridinderivat oder ein Imidazolderivat ist.

16. Polyurethan-System nach Anspruch 15, **dadurch gekennzeichnet, dass** das tertiäre Amin ausgewählt ist unter Trimethylamin, Dimethylethylamin, Triethylamin, Dimethylisopropylamin, Dimethyl-n-propylamin, das Pyridinderivat Phenylpropylpyridin ist und das Imidazolderivat N-Methylimidazol ist.

17. Polyurethan-System nach Anspruch 15, **dadurch gekennzeichnet, dass** das Phenolharz ein Kondensationsprodukt eines Phenols oder eines Phenolderivats mit Aldehyden mit freien Hydroxygruppen ist.

18. Polyurethan-System nach Anspruch 17, **dadurch gekennzeichnet, dass** das Phenolharz 10 bis 50% eines organischen Lösungsmittels enthält.

19. Polyurethan-System nach Anspruch 18, **dadurch gekennzeichnet, dass** das organische Lösungsmittel ein polares organisches Lösungsmittel ist.

20. Verwendung eines Polyurethan-Systems nach den Ansprüchen 11 bis 19 bei der Herstellung von Giesserei-Kemen und -Formen.

## Revendications

1. Composition à base de polyisocyanate qui peut être utilisée dans la préparation de systèmes de liants de fonderie, **caractérisée par le fait qu'**elle a la composition suivante en pourcentage :
(a) un polyisocyanate dans une quantité comprise entre 50 et 95 % en poids;
(b) une huile végétale dans une quantité comprise entre 5 et 40 % en poids ;
(c) un solvant polaire organique aprotique dans une quantité comprise entre 2,5 et 30 % en poids pour un total de 100 %.

2. Composition selon la revendication 1, **caractérisée en ce que** ledit solvant polaire organique aprotique est choisi parmi ceux de formule : 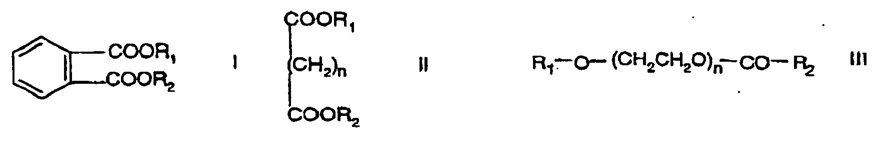 ou des mélanges de ceux-ci, dans laquelle R₁ et R₂, identiques ou différents l'un de l'autre, sont des radicaux alkyle ayant de 1 à 12 atomes de carbone, dans lesquels le nombre total d'atomes de carbone contenus dans lesdits groupes R₁ et R₂ n'excède pas 16, et dans laquelle n se situe entre 1 et 4.

3. Composition selon la revendication 2, dans laquelle R₁ et R₂ sont des radicaux alkyle ayant de 1 à 4 atomes de carbone.

4. Composition selon la revendication 2, **caractérisée ce que** le composé de formule I est le 1,2-diisobutylphtalate, le composé de formule II est les DBE et le composé de formule III est l'acétate de butyldiglycol.

5. Composition selon la revendication 1, **caractérisée en ce que** ledit polyisocyanate contient un nombre de groupes NCO égal à au moins 2.

6. Composition selon la revendication 1, **caractérisée en ce que** ladite huile végétale est l'huile de soja.

7. Composition selon la revendication 1, **caractérisée en ce qu'**elle contient de 70 à 80 % en poids d'isocyanate.

8. Composition selon la revendication 1, **caractérisée en ce qu'**elle contient de 15 à 25 % en poids d'huile végétale.

9. Composition selon la revendication 2, **caractérisée en ce qu'**elle contient de 7,5 à 15 % en poids dudit composé de formule I, II et/ou III.

10. Composition à base de polyisocyanate qui peut être utilisée dans la préparation de systèmes de liants de fonderie, **caractérisée en ce qu'**elle a la composition suivante en poids :
(a) un polyisocyanate dans une quantité comprise entre 70 et 80 % en poids;
(b) de l'huile de soja dans une quantité comprise entre 15 et 25 % en poids ;
(c) du 1,2-diisobutylphtalate, DBE et/ou de l'acétate de butyldiglycol dans une quantité comprise entre 7,5 et 15 % en poids.

11. Utilisation d'une composition selon les revendications 1 à 10, pour la fabrication de systèmes de liants de fonderie.

12. Système de liants de fonderie à base de polyuréthane, **caractérisé en ce qu'**il comprend une composition à base d'isocyanate selon les revendications 1 à 10.

13. Systeme de liants de fonderie à base de polyuréthane, **caractérisé en ce qu'**il comprend :
(a) une composition à base d'isocyanate selon les revendications 1 à 10,
(b) un polyol ; et, facultativement,
(c) un catalyseur.

14. Système à base de polyuréthane selon la revendication 13, **caractérisé en ce que** ledit polyol est une résine phénolique.

15. Système à base de polyuréthane selon la revendication 13, **caractérisé en ce que** ledit catalyseur est une amine tertiaire, un dérivé de pyridine ou un dérivé d'imidazole.

16. Système à base de polyuréthane selon la revendication 15, **caractérisé en ce que** ladite amine tertiaire est choisie parmi la triméthylamine, la diméthyléthylamine, la triéthylamine, la diméthylisopropylamine, la diméthylnormalpropylamine ;que ledit dérivé de pyridine est la phénylpropylpyridine ;et que ledit dérivé d'imidazole est le N-méthylimidazole.

17. Système à base de polyuréthane selon la revendication 15, **caractérisé en ce que** ladite résine phénolique est un produit de condensation d'un phénol ou d'un dérivé phénolique avec des aldéhydes, contenant des groupes hydroxyle libres.

18. Système à base de polyuréthane selon la revendication 17, **caractérisé en ce que** ladite résine phénolique contient de 10 à 50 % d'un solvant organique.

19. Système à base de polyuréthane selon la revendication 18, **caractérisé en ce que** ledit solvant organique est un solvant organique polaire.

20. Utilisation d'un système à base de polyuréthane selon les revendications 11 à 19 dans la fabrication de noyaux et de moules de fonderie.
